Europäisches Patentamt

European Patent Office

Office européen des brevets

(11) Veröffentlichungsnummer: **0 334 048**
**A2**

(12) # EUROPÄISCHE PATENTANMELDUNG

(21) Anmeldenummer: 89103243.5

(51) Int. Cl.⁴: **C22B 1/245 , C10L 5/16**

(22) Anmeldetag: 24.02.89

(30) Priorität: 22.03.88 DE 3809616

(43) Veröffentlichungstag der Anmeldung:
27.09.89 Patentblatt 89/39

(84) Benannte Vertragsstaaten:
**AT BE CH DE ES FR GB GR IT LI LU NL SE**

(71) Anmelder: **LABORLUX S.A. Société Luxembourgeoise de Laboratoires d'Analyses, d'Etudes et d'Essais de Matériaux**
**1, rue Henri Bessemer**
**L-4004 Esch-sur-Alzette(LU)**

(72) Erfinder: **Beckmann, Franz, Dr. rer. nat. Dipl.-Chem.**
**Bert-Brech-Strasse 39**
**D-5102 Würselen(DE)**
Erfinder: **Wagner, Armand, Dr. rer. nat. Dipl.-Chem.**
**Rue Général Petton 41**
**L-4277 Esch-sur-Alzette(LU)**

(74) Vertreter: **Bauer, Hubert, Dipl.-Ing.**
**Am Keilbusch 4**
**D-5100 Aachen(DE)**

(54) **Verfahren zur Herstellung von Formkörpern.**

(57) Zur Herstellung von Formkörpern wird ein Gemisch gebildet, das aus wenigstens zwei Komponenten besteht. Als erste Komponente dient mindestens ein feinkörniger, unter 800 °C nicht erweichender Feststoff. Als zweite Komponente dient mindestens ein pyrolytisch zersetzbares Bindemittel. Die mittlere Temperatur der ersten Komponente liegt oberhalb und die mittlere Temperatur der zweiten Komponente liegt unterhalb einer einheitlichen Misch- und Verformungstemperatur. Bei dieser Temperatur findet eine die Bindefähigkeit der zweiten Komponente nicht zerstörende Pyrolyse und Entgasung statt. Um aus dem so gebildeten Gemisch feste, hitzebeständige, kohlenstoffhaltige Formkörper zu erhalten, die weder den Einsatz backender Steinkohlen noch eine aufwendige Nachverkokung erfordern, wird als zweite Komponente, die 15 bis 50 % des Gemisches beträgt, ein Bindemittel eingesetzt, das mindestens teilweise aus einem verflüssigten bituminösen Stoff mit einem mittleren CCT-Wert über 20 % besteht.

Aus dem bituminösen Stoff werden innerhalb des in ständiger Bewegung gehaltenen Gemischs durch Destillation und Pyrolyse Gase abgetrennt. Schließlich werden aus dem Gemisch bei Temperaturen von 460 bis 590 °C Formkörper hergestellt, sobald in dem pyrolytisch zersetzten bituminösen Stoff eine Verfestigung und Koksbildung eingesetzt hat.

## Verfahren zur Herstellung von Formkörpern

Die Erfindung betrifft ein Verfahren zur Herstellung von Formkörpern aus einem zwei Komponenten enthaltenden Gemisch. Eine erste Komponente besteht aus mindestens einem feinkörnigen Feststoff, der unter 800° C nicht erweicht. Eine zweite Komponente besteht aus mindestens einem Bindemittel, das pyrolytisch zersetzbar ist. Die mittlere Temperatur der ersten Komponente liegt oberhalb und die der zweiten Komponente unterhalb einer einheitlichen Misch- und Verformungstemperatur. Diese Temperatur ist so eingestellt, daß eine Pyrolyse und Entgasung der zweiten Komponente stattfindet, wobei deren Bindefähigkeit jedoch nicht zerstört wird.

Aus der GB-2 157 312 B ist ein derartiges Verfahren bekannt. Dabei wird das verformbare plastische Gemisch aus thermisch weitgehend stabilen Stoffen als erste Komponente und durch pyrolytische Zersetzung backender Steinkohle als zweite Komponente in einem Wanderbettreaktor in ständiger Misch- und Knetbewegung gehalten und schließlich einer Brikettierpresse zugeleitet, die das Gemisch zu Formkörpern preßt. Nach dieser sogenannten Heißbrikettierung haben die so hergestellten Formkörper aus Koksen und Mischkoksen bereits ein festes und hitzebeständiges Schwelkoksgerüst. Hält man die Temperatur der Formkörper während einer bestimmten Verweildauer auf Preßtemperatur, so steigt die Bruch- und Abriebfestigkeit der Formkörper auf Werte, welche die Festigkeitswerte von normalem Stückkoks aus der Hochtemperaturverkokung noch übertreffen.

Die nach dem bekannten Verfahren hergestellten Formkörper hinterlassen einen unerwünschten Aschenanteil, der auf die Verwendung von backender Steinkohle als Bindemittel zurückzuführen ist. Sollen die mit Kokskohle hergestellten Formkörper, die außer Kohlenstoff Quarz, Schwermetalloxide, Kalk und entsprechende Stoffe enthalten, zur Herstellung der Metalle, wie Silizium, bzw. der Karbide, wie Kalziumkarbid, im Elektroofen eingesetzt werden, wirkt sich der Aschenanteil besonders nachteilig aus. So läßt sich beispielsweise mit Hilfe von sand- und kohlenstoffhaltigen Formkörpern, bei denen backende Steinkohle als Bindemittel eingesetzt wird, kein reines Rohsilizium erzeugen.

Es sind aber auch Verfahren allgemein bekannt, bei denen die feinkörnigen Feststoffe anstelle von backender Steinkohle mit verflüssigten bituminösen Stoffen, die in DIN 55946 definiert sind, gemischt und geknetet werden. Dabei liegt die Mischtemperatur gleichfalls unterhalb der Temperatur, bei der sich die bituminösen Stoffe thermisch zersetzen. Das so erzeugte verformbare plastische Gemisch wird wiederum Brikettierpressen aufgegeben und darin zu Formkörpern gepreßt.

Die nach diesem Verfahren hergestellten Formkörper hinterlassen zwar keinen störenden Aschenanteil, verlieren aber beim Erhitzen ihre Festigkeit und bedürfen daher bei der Weiterverarbeitung einer schonenden Behandlung. Sollen diese Formkörper jedoch ein ausreichend hitzebeständiges Koksgerüst erhalten, müssen sie nachverkokt werden. Dazu wurde schon vorgeschlagen, die Nachverkokung der als Reduktionsmittel bei der Erzeugung von Metallen oder Karbiden eingesetzten Formkörper in den Reduktionsofen zu verlegen, was sich jedoch in der Praxis nicht bewährt hat.

Der Erfindung liegt die Aufgabe zugrunde, ein Verfahren der eingangs beschriebenen Art vorzuschlagen, mit dem sich feste hitzebeständige kohlenstoffhaltige Formkörper, wie Kokse und Mischkokse, herstellen lassen, die weder den Einsatz backender Steinkohle noch eine aufwendige Nachverkokung erfordern.

Zur Lösung dieser Aufgabe wird von einem Verfahren der im Oberbegriff des Anspruchs 1 genannten gattungsgemäßen Art ausgegangen und erfindungsgemäß vorgeschlagen, nach den im kennzeichnenden Teil desselben angegebenen Merkmalen zu verfahren.

Während die verflüssigten bituminösen Stoffe mit einer Temperatur zugeführt werden, die um und unterhalb ihres Siedepunktes liegt, werden die feinkörnigen Feststoffe vor ihrer Zugabe so hoch erhitzt, daß sich beim Vermischen der beiden Komponenten die gewünschte Mischtemperatur einstellt. Werden die beiden Komponenten in mehr als zwei Gutströmen zugeführt, was insbesondere für die feinkörnigen Feststoffe der Fall sein kann, so resultiert die gewünschte Mischtemperatur naturgemäß aus allen -gegebenenfalls unterschiedlichen - Wärmeeinhalten der einzelnen Gutströme.

Die Mischtemperatur liegt deshalb im unteren Bereich der Spanne, innerhalb der eine Pyrolyse der bituminösen Stoffe stattfindet, nämlich im Temperaturbereich der Schwelung bzw. der Tieftemperaturverkokung von 520 +/- 60° C, weil oberhalb dieses Bereichs die Pyrolyse zu intensiv und unterhalb dieses Bereichs die Pyrolyse zu langsam verlaufen oder gar nicht stattfinden würde. Die gewünschte Pyrolyse, d.h. die angestrebte Zersetzungsgeschwindigkeit der bituminösen Stoffe, variiert auch mit ihrer stofflichen Zusammensetzung. Bituminöse Stoffe mit einem hohen Anteil kondensierter Ringverbindungen erfordern tendenziell eine höhere Zersetzungstemperatur als bituminöse Stoffe mit einem geringeren Anteil solcher Verbindungen.

Die bituminösen Stoffe sollen einen möglichst hohen Verkokungsrückstand aufweisen. Der mittlere CCT-Wert des Einsatzes an bituminösen Stoffen liegt daher über 20 %. Werden besonders geringe Schwefelgehalte angestrebt, ist Hartpech aus Steinkohlenteer zu empfehlen. Für andere Fälle sind Krackbitumen aus Erdöl vorteilhaft. Die flüchtigen Pyrolyseprodukte werden abgeführt, und zwar mit stabilen Verbindungen, die in den bituminösen Stoffen enthalten waren, jedoch sich nicht zersetzen, sonderen ihrer Siedelage entsprechend bei der Mischtemperatur lediglich verdampfen. In dem aus dem Misch- und Schwelaggregat abgeführten Gas, dem sogenannten Mischergas, sind auch die flüchtigen Stoffe enthalten, die bei der Mischtemperatur von den feinkörnigen, unter 800°C nicht erweichenden Feststoffen thermisch abgespalten werden. Das ist beispielsweise bei Anthrazit und Magerkohle der Fall.

Die Schweldauer bei konstanter Zersetzungstemperatur von 520 +/- 60°C bis zur beginnenden Verfestigung der bituminösen Stoffe beträgt 2 bis 12 Minuten. Die Schweldauer steigt mit sinkender Zersetzungstemperatur und vermindert sich mit steigender Zersetzungstemperatur. Das geschwelte Mischgut wird bei beginnender Verfestigung der bituminösen Stoffe zur Formgebung einer Presse, im Normalfall einer Doppelwalzenpresse, aufgegeben. Die Verformung erfolgt grundsätzlich bei Misch- und Schweltemperatur. Lediglich eine geringfügige Abkühlung des gemischten Schwelguts vor der Verformung ist zulässig.

Überrraschenderweise entsteht bei Anwendung des erfindungsgemäßen Verfahrens ein Formkörper, der für die weitere Verarbeitung eine ausreichende Festigkeit aufweist und diese auch bei weiterer Wärmezufuhr nicht vorübergehend einbüßt.

Die kohlenstoffhaltigen Formkörper können zur Steigerung ihrer Festigkeit und Hitzebeständigkeit nach einer Ausgestaltung des erfindungsgemäßen Verfahrens bis zu 6 Stunden bei Preßtemperatur +/- 50°C gehalten werden und/oder zwischen 640°C und 1400°C erhitzt werden.

Die optimale Misch- und Schweldauer ist durch die maximale Festigkeit und Formbeständigkeit der heißen Preßlinge gekennzeichnet. Bei ungenügend langer Schweldauer platzen die heißen Preßlinge in der Preßnaht auf, was entsprechend der Formveränderung als "Schnäbeln" bezeichnet wird. Bei zu langer Schweldauer verliert der Schwelrückstand der bituminösen Stoffe schnell an Bindefähigkeit. Die Festigkeit, insbesondere die Abriebfestigkeit, sinkt in beiden Fällen.

Durch ein Verweilen bei Preßtemperatur wird die Pyrolyse weitergeführt. Der aus den bituminösen Stoffen gebildete Schwelkoks verfestigt sich im Verlauf der Verweilzeit weiter. Nach einer Verweildauer von 2 bis 4 Stunden verlieren die Formkörper ihre anfänglich noch deutliche Empfindlichkeit gegenüber plötzlichen Temperaturänderungen, wie sie z.B. beim Eintauchen in kaltes Wasser entstehen. Dagegen lassen sich die erfindungsgemäß zusätzlich verfestigten Formkörper im heißen Zustand im Tauchbad oder durch Besprühen mit Wasser in einfacher Weise abkühlen.

Das Koksgerüst der nach dem erfindungsgemäßen Verfahren hergestellten Formkörper ist im allgemeinen fester als das schon bekannte aus backenden Steinkohlen gebildete Koksgerüst der bekannten Formkörper. Letztere haben einen Schwelkoksanteil von normalerweise ca. 30 %. Sie verlieren ihre Festigkeit, wenn der Anteil des Schwelkoksgerüsts unter 20 % sinkt. Bei den nach dem erfindungsgemäßen Verfahren mit bituminösen Stoffen hergestellten Formkörpern liefert im allgemeinen ein Anteil des Schwelkoksgerüsts von 10 bis 20 % eine ausreichende Produktfestigkeit. Hierdurch wird der Gehalt an eingetragenen, unerwünschten Begleitstoffen noch weiter gesenkt.

Der aus den bituminösen Stoffen gebildete feste Schwelkoks hat, wenn er nicht wesentlich über die Preßtemperatur hinaus erhitzt worden ist, Restflüchtige. In vielen Anwendungsbereichen stören restliche flüchtige Bestandteile der Formkörper nicht. Sie stören in der Regel nicht beim Formkoks, der als Brennstoff oder Reduktionsmittel Verwendung findet. Sie stören auch nicht in den Mischkoksen, die im Elektroofen zur Gewinnung von Metallen oder Karbiden eingesetzt werden.

Restflüchtige können durch Kalzinieren der Formkörper in an sich bekannter Weise abgespalten werden. Einer solchen Kalzinierung können die heißen Formkörper unmittelbar nach dem Preßvorgang unterworfen werden. Kalzinierte Formkörper können z.B. für die Herstellung von Elektroden und Kohlenstoffsteinen verwendet werden. Sie werden aus Kohlenstoffträgern hergestellt und sind daher als Formkokse zu definieren.

Je nach ihrer Verwendung können die nach dem erfindungsgemäßen Verfahren hergestellten Formkörper sehr verschiedene Stoffe von unterschiedlicher Zusammensetzung enthalten. So kann die erste Komponente aus Sand, Phosphat, Metalloxiden, Erzen, Kalk, Metallen, Gicht-und/oder Stahlwerksstaub, Koksgrus, Petrolkoks, Pechkoks, niederflüchtiger Steinkohle und/oder aus mindestens zwei der vorgenannten Stoffe und die zweite Komponente aus Bitumen, Asphalten, Teeren und Pechen nach der Definition der DIN 55946 oder aus mindestens zwei der vorgenannten Stoffe, insbesondere Hartpech aus Steinkohlenteer und/oder Krackbitumen aus Erdöl, bestehen.

Formkörper mit den vorstehend aufgeführten Inhaltsstoffen verfügen über ein festes und im Normalfall aschenarmes Schwelkoks- oder Koksgerüst, durch das sie stabil zusammengehalten werden und das durch die pyrolytische Zersetzung bituminöser Stoffe gebildet wird. Weiterhin zeichnen sich diese Formkörper durch einen geringen offenen Porenraum aus, wodurch sowohl die Trommel- als auch die Abriebfestigkeit erhöht wird.

Zur Durchführung des erfindungsgemäßen Verfahrens läßt sich beispielsweise eine Vorrichtung verwenden, die in der bereits oben erwähnten GB 2 157 312 B dargestellt und beschrieben ist.

## Ansprüche

1. Verfahren zur Herstellung von Formkörpern aus einem zwei Komponenten enthaltenden Gemisch, von denen eine erste Komponente aus mindestens einem feinkörnigen, unter 800 °C nicht erweichenden Feststoff und eine zweite Komponente aus mindestens einem pyrolytisch zersetzbaren Bindemittel besteht, wobei die mittlere Temperatur der ersten Komponente oberhalb und die der zweiten Komponente unterhalb einer einheitlichen Misch- und Verformungstemperatur liegt, bei der eine die Bindefähigkeit nicht zerstörende Pyrolyse und Entgasung der zweiten Komponente stattfindet, dadurch gekennzeichnet, daß
- die zweite 15 bis 50 % des Gemisches betragende Komponente mindestens teilweise aus einem verflüssigten bituminösen Stoff mit einem mittleren CCT-Wert über 20 % besteht,
- aus dem bituminösen Stoff innerhalb des in ständiger Bewegung gehaltenen Gemisches während 2 bis 20 Minuten durch Destillation und Pyrolyse Gase abgetrennt und diese aus dem Gemisch entfernt werden,
- aus dem Gemisch bei einer Temperatur von 460 bis 590 °C unverzüglich Formkörper hergestellt werden, sobald in dem pyrolytisch zersetzten bituminösen Stoff eine Verfestigung und Koksbildung begonnen hat.

2. Verfahren nach Anspruch 1, dadurch gekennzeichnet, daß die Formkörper bis 6 Stunden bei Preßtemperatur +/-50 °C gehalten werden.

3. Verfahren nach Anspruch 1 oder 2, dadurch gekennzeichnet, daß die Formkörper zwischen 640 °C und 1400 °C erhitzt werden.

4. Verfahren nach mindestens einem der Ansprüche 1 bis 3, dadurch gekennzeichnet, daß die erste Komponente aus Sand, Phosphaten, Metalloxiden, Erzen, Kalk, Metallen, Gicht- und/oder Stahlwerksstaub, Koksgrus, Petrolkoks, Pechkoks, niederflüchtiger Steinkohle und/oder aus mindestens zwei der vorgenannten Stoffe und die zweite Komponente aus Bitumen, Asphalten, Teeren und Pechen nach der Definition der DIN 55946 oder aus mindestens zwei der vorgenannten Stoffe, insbesondere Hartpech aus Steinkohlenteer und/oder Krackbitumen aus Erdöl, besteht.